(19)

Europäisches Patentamt
European Patent Office
Office européen des brevets

(11) **EP 4 451 183 A1**

(12) **EUROPEAN PATENT APPLICATION**
published in accordance with Art. 153(4) EPC

(43) Date of publication:
**23.10.2024 Bulletin 2024/43**

(21) Application number: **22905864.9**

(22) Date of filing: **05.07.2022**

(51) International Patent Classification (IPC):
***G06Q 10/06*** (2023.01)

(86) International application number:
**PCT/CN2022/103801**

(87) International publication number:
**WO 2023/109099 (22.06.2023 Gazette 2023/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.12.2021 CN 202111535061**

(71) Applicant: **CHONGQING UNIVERSITY OF POSTS
AND
TELECOMMUNICATIONS**
Chongqing 400065 (CN)

(72) Inventors:
• **LONG, Hongyu**
Chongqing 400065 (CN)

• **ZHAN, Xiaosheng**
Chongqing 400065 (CN)
• **XU, Yang**
Chongqing 400065 (CN)
• **YIN, Xiao**
Chongqing 400065 (CN)
• **HUANG, Zhaocheng**
Chongqing 400065 (CN)
• **ZHAO, Yinhao**
Chongqing 400065 (CN)
• **HE, Yuqiang**
Chongqing 400065 (CN)
• **LIU, Shanghua**
Chongqing 400065 (CN)

(74) Representative: **Bals & Vogel Patentanwälte
PartGmbB**
Konrad-Zuse-Str. 4
44801 Bochum (DE)

(54) **CHARGING LOAD PROBABILITY PREDICTION SYSTEM AND METHOD BASED ON
NON-INTRUSIVE DETECTION**

(57)    Involved is the technical field of charging load prediction, and particularly a non-intrusive detection-based charging load probability prediction system and method. The system includes an image acquisition unit, a temperature detection unit, a positioning unit, an Internet of vehicles service system, and a cloud storage computing platform. In the cloud storage computing platform, a vehicle image acquired by a traffic camera and real-time temperature data are received in real time, and data recognized from the vehicle image is classified according to a temperature data range and input to a corresponding charging load prediction model to obtain a probability that a target is to be charged at specific time and a specific place and a charging load, for charging facility planning and construction in some areas over time. A charging demand of an electric vehicle in a prediction area can be predicted to select a reasonable charging facility layout plan.

Fig. 1

## Description

## Field of the Invention

The present disclosure relates to the technical field of the charging load prediction, and particularly to a non-intrusive detection-based charging load probability prediction system and method.

## Background of the Invention

A charging load of an electric vehicle is highly random in time and space. With the popularization of electric vehicles in the future, the charging load may bring increasingly great impact to operation of an urban distribution network, particularly power distribution networks of small and medium-sized cities. On the one hand, large-scale connection of charging loads of electric vehicles to a power distribution network affects power quality of the power distribution network, and may cause voltage offset, three-phase unbalance, and harmonic pollution of the power distribution network, further increasing a peak-valley difference and directly affecting the reliability of the power distribution network. On the other hand, large-scale connection changes a network loss of the power distribution network and the service life of a transformer, affecting the economic operation of the power distribution network.

Charging load prediction of electric vehicles is the basis of analysis of the impact of connection of the electric vehicles on a power distribution network, planning and controlled operation of the power distribution network, two-way interaction of the electric vehicles and the power distribution network, and coordinated research of the electric vehicles and other energy and transportation systems. Since charging of the electric vehicle is random in time and space, charging load prediction involves very complicated factors, and considering from different angles can obtain different load prediction models and results. In order to ensure normal and reliable operation of an urban distribution network, it is necessary to accurately predict a charging load of electric vehicles in the future. It is urgent to investigate and analyze the impact of large-scale connection of electric vehicles on the structure of the power distribution network, power quality, a load curve, scheduling control, and other aspects, so as to form an adaptive solution for coordinated development of the power distribution network and electric vehicles, more effectively promoting the promotion and application of new-energy electric vehicles. Existing load prediction methods for electric vehicles are mainly based on factors affecting the load of electric vehicles, and can be divided into a short-term load prediction method for an electric power system, a Monte Carlo simulation method, and other new load prediction methods for electric vehicles. However, the impact of a thermostatically controlled load is not considered in the existing research methods. That is, in cold or hot seasons, turning on an air conditioner in an electric vehicle will increase power consumption of the electric vehicle, exacerbating the "range anxiety" of the driver and making the electric vehicle required to be charged more frequently.

Frequent charging of an electric vehicle caused by the ambient temperature intensifies the load of the power distribution network in typical seasons, and temperature becomes one of non-negligible factors affecting load prediction of electric vehicles. At present, there are few researches that take ambient temperature as one of factors affecting charging demand prediction.

## Summary of the Invention

In view of this, an objective of the present disclosure is to provide a non-intrusive detection-based charging load probability prediction system and method. Ambient temperature is added as an affecting factor to predict a charging demand of an electric vehicle, so as to select a reasonable charging facility layout plan.

The foregoing technical problems are solved in the present disclosure by the following technical means. An aspect of the present disclosure provides a non-intrusive detection-based charging load probability prediction system, including:

an image acquisition unit, configured to obtain an image of a passing vehicle through a traffic camera deployed on each road, and perform image data processing;

a temperature detection unit, configured to obtain an ambient temperature through a temperature sensor mounted beside the traffic camera;

a positioning unit, mounted to the traffic camera and configured to obtain a position of the traffic camera to further obtain a position of the electric vehicle at a shooting moment;

an Internet of vehicles service system, configured to obtain current charging station information around based on the geographical position of the traffic camera; and

a cloud storage computing platform in communication connection with the image acquisition unit, the temperature detection unit, the Internet of vehicles service system, and the positioning unit, configured to perform data processing and storage on a historical vehicle image acquired by the image acquisition unit and train a charging load prediction model by combining license plate information, a head turning action of a driver, and a facial expression feature of the driver recognized from historical vehicle image data with historical air conditioner on-state data and historical charging record of the electric vehicle, and configured to receive in real time the vehicle image acquired and processed by the traffic camera and real-time temperature data of a temperature sensor, classify data recognized from the vehicle image according to a temperature data range, and input the data to the corresponding charging load prediction model to obtain a probability that the target is to be charged at specific time and a specific place as well as a charging load of the target, for charging facility planning and construction in some areas over time.

Further, the image acquisition unit includes:

the traffic camera, deployed on each road and configured to shoot the image of the passing vehicle,

an image preprocessing module in communication connection with the traffic camera, configured to perform data enhancement, normalization, and graying processing on the image of the passing vehicle, and

a first communication module, connected with the cloud storage computing platform by a 5th-Generation (5G) network and configured to upload the preprocessed vehicle image to the cloud storage computing platform;

the temperature detection unit includes:

the temperature sensor, mounted beside the traffic camera and configured to monitor the ambient temperature, and

a third communication module, connected with the cloud storage computing platform by the 5G network and configured to upload the ambient temperature to the cloud storage computing platform;

the positioning unit includes:

a positioning module, configured to obtain the position of the traffic camera to further obtain the position of the electric vehicle at the shooting moment, and

a fourth communication module, connected with the cloud storage computing platform by the 5G network and configured to upload position information data to the cloud storage computing platform; and

the Internet of vehicles service system includes:

a database module, configured to store charging station information of each area,

a charging recording module, configured to store historical charging data of various electric vehicles,

an air conditioner on-state recording module, configured to store historical air conditioner on-state data of various electric vehicles, and

a fifth communication module, connected with the cloud storage computing platform by the 5G network and configured to upload the charging station information of each area and the historical charging data and historical air conditioner on-state data of the electric vehicles to the cloud storage computing platform.

Further, the cloud storage computing platform includes:

a historical image database module, configured to store the preprocessed historical vehicle image to form a historical database;

an image recognition module, configured to recognize the license plate information, the head turning action of the driver, and the facial expression feature of the driver for the electric vehicle in the processed vehicle image;

a model training module, configured to train the charging load prediction model by combining the license plate information, the head turning action of the driver, and the facial expression feature of the driver recognized from the historical vehicle image data and the historical air conditioner on-state data and historical charging record of the electric vehicle;

a model prediction module, configured to receive in real time the vehicle image acquired and processed by the traffic camera and real-time temperature data of the temperature sensor, classify the data recognized from the vehicle image according to the temperature data range, and input the data to the corresponding charging load prediction model to obtain the probability that the target is to be charged at the specific time and the specific place as well as the charging load of the target, to implement charging facility planning and construction in some areas over time; and

a second communication module, connected with the image acquisition unit, the temperature detection unit, the Internet of vehicles service system, and the positioning unit by the 5G network.

Another aspect of the present disclosure provides a non-intrusive detection-based charging load probability prediction method, including the following steps:

acquiring, by a traffic camera deployed on a road, a historical vehicle image of a passing vehicle to create an image database;

performing data processing on the historical vehicle image to obtain license plate information, a head deflection action of a driver, and a facial expression feature of the driver;

obtaining, based on the license plate information by an Internet of vehicles service system, a charging record of the electric vehicle, including a charging place and charging time;

establishing a charging load demand prediction model for each driver by taking the head turning action of the driver and the facial expression feature of the driver as independent variables and the charging time and the charging place as dependent variables;

obtaining, by the Internet of vehicles service system, a historical air condition on-state of the electric vehicle, and training and optimizing the charging load demand prediction model based on air conditioner on-state information to obtain a first load demand prediction model in case that an air conditioner is on and a second load demand prediction model in case that the air conditioner is off;

detecting, by a temperature sensor beside the traffic camera, an ambient temperature to determine a temperature corresponding to an image shot at a specific moment to determine whether the air conditioner in the vehicle is on, and inputting data to the first load demand prediction model for charging load prediction if the air conditioner in the vehicle is on, or inputting data to the second load demand prediction model for charging load prediction if the air conditioner is off; and

obtaining, in combination with a positioning unit on the traffic camera, a predicted probability that the electric vehicle at a specific position at a specific moment is to be charged at specific time and a specific place as well as a predicted charging load.

Further, the image database includes $m$ cameras, $t$ moments, and historical image data of $n$ targets, including totally $mnt$ basic images.

Further, recognition of the license plate information includes the following steps:

performing license plate image preprocessing: converting the vehicle image from a Red Green Blue (RGB) channel to a Hue Saturation Value (HSV) channel, converting an HSV-channel image into a grayscale image, and performing binarization and morphological processing on the grayscale image;

performing license plate positioning: performing rectangle detection on the grayscale image subjected to morphological processing by use of function cv2.findContours() to position a license plate region, and segmenting the license plate region;

performing license plate character segmentation: sequentially performing license plate horizontal straightening, license plate frame and rivet removal, and character segmentation operations on the segmented license plate region, license plate horizontal straightening including inclination angle detection and inclination correction;

performing license plate character recognition: performing Histogram of Oriented Gradient (HOG) feature extraction to convert characters on the image into feature vectors, and performing classification and discrimination by a Support Vector Machine (SVM) classification algorithm; and

obtaining a result: recognizing whether the electric vehicle is a new-energy vehicle as well as a license plate number by classification and discrimination.

Further, the head turning action of the driver is obtained by the following steps:

performing data processing on the image of the passing vehicle to obtain vehicle type information and driver position information, and determining a head turning direction of the driver and a corresponding direction of an instrument panel based on the vehicle type information and the driver position information;

according to a law of human head movement, if a human head turns about a central axis of the head without swinging leftwards and rightwards in a vertical direction, representing a line segment connecting two eyes in case that a head of the driver faces forward as a line segment $\overline{AB}$, representing a spatial connecting line segment between the two eyes after the head turns by an angle $\theta$ as a line segment $\overline{CD}$, the line segments $\overline{AB}$ and $\overline{CD}$ being numerically equal, representing a projection of a distance between the two eyes on a frontal plane after the head turns as a line segment $\overline{CG}$, and performing geometric analysis to obtain that an acute angle between the line segment $\overline{CG}$ and the line segment $\overline{CD}$ is equal to the angle that the head turns by, such that a calculation formula for the angle that the head turns by is represented as:

$$\theta = \arccos(\frac{\overline{CG}}{\overline{CB}});$$

and

determining that the head turns to the left if $\theta$ is calculated to be negative, and determining that the head turns to the right if $\theta$ is positive.

Further, the facial expression feature of the driver is obtained by the following steps:

in a feature sampling layer, performing image data preprocessing, face detection, face positioning, convolution feature learning, and feature sampling on the vehicle image, inputting an original vehicle image sequence $x = \{x_1, x_2, \cdots, x_T\}$, and preprocessing the image to eliminate an impact of light; at moment $t = 1$, fast positioning and segmenting a face image by a Fast-Convolutional Neural Network (Fast-CNN) method; performing fast face image tracking and segmentation at a subsequent moment; then, inputting the face image to a convolutional neural network for learning, and performing cross convolution and pooling to generate abstract image features; finally, inputting the abstract image features to a K-average sampling layer, performing average sampling on totally K continuous image features $x_{T-K+1}, x_{T-K+2}, x_T$ in the K-average sampling layer, and inputting averagely sampled image features to a Recurrent Neural Network (RNN) for learning as input features;

implementing main loop of the RNN and information memorization of a Long Short-Term Memory (LSTM): obtaining a convolution sampled feature vector from the feature sampling layer as an input, then inputting the feature vector to the RNN according to a time sequence, extracting, by the recurrent unit LSTM, information to generate state information, and finally, classifying an output feature vector;

classifying a feature vector output sequence learned by the RNN, where T is set as a sequence length, L is set as a length of a label, and when there is the sequence T, there are L to the T-th possibilities for the label path, each of which is referred to as a "path", and a formula for a conditional probability of the path is:

$$p(\pi|\mathrm{x}) = \prod_{t=1}^{T} y^t_{\pi(t)} = \prod_{t=1}^{T} p(\pi_{(t)}|x)$$

where $\pi_{(t)}$ represents an output path $\pi$ at moment t, and $y^t$ represents a network output of the RNN at moment t;

a predicted conditional probability of the label is represented as a sum of conditional probabilities of the corresponding paths:

$$p(L|\mathrm{x}) = \sum_{V_{(\pi)}=L} p(\pi|x)$$

where V represents an operator of converting the output path $\pi$ into a target L;

when images are input to the sequence for training, an expression in an image input at a current moment is a label corresponding to the maximum conditional probability:

$$\mathrm{L}^* = \arg\max_L p(L|x);$$

and

recognizing various expressions of anger, disgust, fear, happiness, sadness, surprise, and neutrality of the driver.

Further, the charging load demand prediction model is established by the following steps:
if model training is performed with N sets of data, performing random forest algorithm analysis:

a: determining a charging behavior of the electric vehicle as a predictive variable $X_o$ and eight factors of anger, disgust, fear, happiness, sadness, surprise, and neutrality shown on a face of the driver as well as head turning within one hour before charging as affecting variables $X_i$;

b: setting a sampling frequency $b = 1,2,\cdots,B_s$, and repeating steps c and d;

c: randomly selecting a sample subset from $X_o$ and $X_i$ as a training set by an autonomous repeated sampling technology;

d: obtaining a regression tree model $r_{fb}$ based on the training set; and

after training, for a new sample $x$, averaging predicted values of all regression trees by a random forest model to obtain a predicted value $\hat{p}$ of the

sample:

$$\hat{p} = \frac{1}{B_s} \sum_{b=1}^{B_s} r_{fb}(x)$$

Further, in the step of determining whether an air conditioner in the vehicle is on, there is made such a setting that the air conditioner in the vehicle is off if the ambient temperature detected by the temperature sensor is 14°C to 28°C, otherwise the air conditioner in the vehicle is on.

According to the non-intrusive detection-based charging load probability prediction method of the present disclosure, the charging probability and the charging load are detected non-intrusively, and everything that happens after the charging load demand prediction model is obtained is not required to be related to the driver, so that a relatively great error of a prediction result caused by the fact that the mood of the driver is affected is avoided. According to the non-intrusive detection-based charging load probability prediction method of the present disclosure, the image data acquired and processed by the traffic camera and the real-time temperature data of the temperature sensor are received in real time, and the image data is classified according to a temperature result, and is input to the corresponding charging load demand prediction model, thereby predicting a probability that the target electric vehicle is to be charged at specific time and a specific place as well as a charging load. According to the present disclosure, a charging demand of an electric vehicle in a prediction area can be predicted to select a reasonable charging facility layout plan.

**Brief Description of the Drawings**

Fig. 1 is a schematic system architectural diagram of a non-intrusive detection-based charging load probability prediction system according to the present disclosure;

Fig. 2 is a schematic flowchart of a non-intrusive detection-based charging load probability prediction method according to the present disclosure; and

Fig. 3 is a reduced diagram of a head turning model of a driver.

**Detailed Description of the Embodiments**

The technical solutions in embodiments of the present disclosure will be described clearly and completely below in combination with the drawings in the embodiments of the present disclosure. Clearly, the described embodiments are not all but only part of embodiments of the present disclosure. All other embodiments obtained by those of ordinary skill in the art based on the embodiments in the present disclosure without creative work shall fall within the scope of protection of the present disclosure.

Terms "first", "second", etc., in the description, claims, and drawings of the present disclosure are for distinguishing different objects rather than describing a specific sequence.

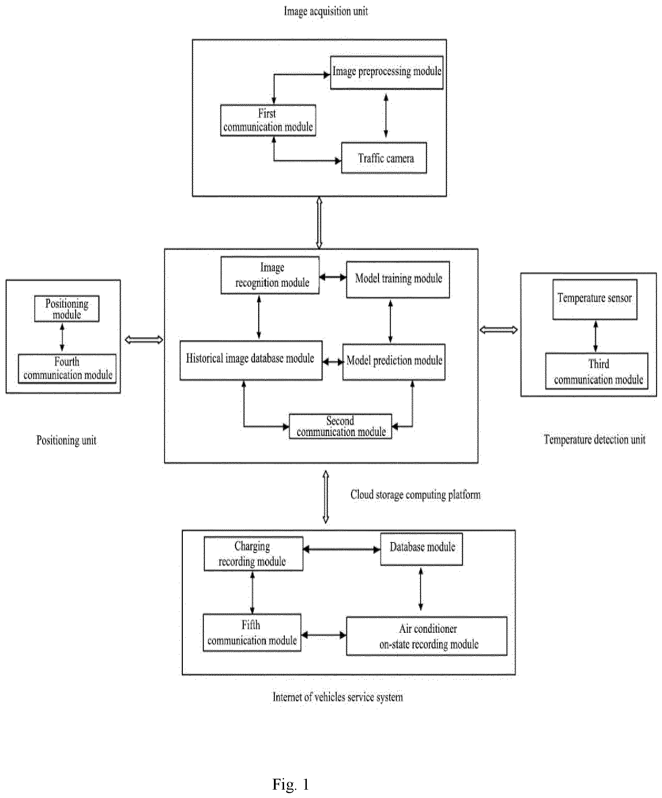

An embodiment of the present disclosure provides a non-intrusive detection-based charging load probability prediction system, which, as shown in Fig. 1, includes an image acquisition unit, a temperature detection unit, a positioning unit, an Internet of vehicles service system, and a cloud storage computing platform.

The image acquisition unit is configured to obtain an image of a passing vehicle through a traffic camera deployed on each road, and perform image data processing. The temperature detection unit is configured to obtain an ambient temperature through a temperature sensor mounted beside the traffic camera. The positioning unit is mounted to the traffic camera, and is configured to obtain a position of the traffic camera to further obtain a position of the electric vehicle at a shooting moment. The Internet of vehicles service system is configured to obtain current charging station information around based on the geographical position of the traffic camera.

The cloud storage computing platform is in communication connection with the image acquisition unit, the temperature detection unit, the Internet of vehicles service system, and the positioning unit, is configured to perform data processing and storage on a historical vehicle image acquired by the image acquisition unit and train a charging load prediction model by combining license plate information, a head turning action of a driver, and a facial expression feature of the driver recognized from historical vehicle image data with historical air conditioner on-state data and historical charging record of the electric vehicle, and is configured to receive in real time the vehicle image acquired and processed by the traffic camera and real-time temperature data of a temperature sensor, classify data recognized from the vehicle image according to a temperature data range, and input the data to the corresponding charging load prediction model to obtain a probability that the target is to be charged at specific time and a specific place as well as a charging load of the target. The probability of charging at the specific time and the specific place and the charging load are available for charging facility planning and construction in some areas over time.

In an embodiment of the present disclosure, the image acquisition unit includes the traffic camera, an image preprocessing module, and a first communication module. The traffic camera is deployed on each road, and is configured to shoot the image of the passing vehicle. The image preprocessing module is in communication connection with the traffic camera, and is configured to perform data enhancement, normalization, and graying processing on the image of the passing vehicle. The first communication module is connected with the cloud storage computing platform by a 5G network, and is configured to upload the preprocessed vehicle image to the cloud storage computing platform.

The temperature detection unit includes a temperature sensor and a third communication module. The temperature sensor is mounted beside the traffic camera, and is configured to monitor the ambient temperature. The third communication module is connected with the cloud storage computing platform by the 5G network, and is configured to upload the ambient temperature to the cloud storage computing platform.

The positioning unit includes a positioning module and a fourth communication module. The positioning module is configured to obtain the position of the traffic camera to further obtain the position of the electric vehicle at the shooting moment. The fourth communication module is connected with the cloud storage computing platform by the 5G network, and is configured to upload position information data to the cloud storage computing platform.

The Internet of vehicles service system includes a database module, a charging recording module, an air conditioner on-state recording module, and a fifth communication module. The database module is configured to store charging station information of each area. The charging recording module is configured to store historical charging data of various electric vehicles. The air conditioner on-state recording module is configured to store historical air conditioner on-state data of various electric vehicles. The fifth communication module is connected with the cloud storage computing platform by the 5G network, and is configured to upload the charging station information of each area and the historical charging data and historical air conditioner on-state data of the electric vehicles to the cloud storage computing platform.

In an embodiment of the present disclosure, the cloud storage computing platform includes a historical image database module, an image recognition module, a model training module, a model prediction module, and a second communication module. The historical image database module is in communication connection with the image preprocessing module, and is configured to store the preprocessed historical vehicle image to form a historical database. The image recognition module is in communication connection with the image preprocessing module, and is configured to recognize the license plate information, the head turning action of the driver, and the facial expression feature of the driver for the electric vehicle in the processed vehicle image. The model training module is configured to train the charging load prediction model by combining the license plate information, the head turning action of the driver, and the facial expression feature of the driver recognized from the historical vehicle image data and the historical air conditioner on-state data and historical charging record of the electric vehicle. The model prediction module is configured to receive in real time the vehicle image acquired and processed by the traffic camera and real-time temperature data of the temperature sensor, classify the data recognized from the vehicle image according to the temperature data range, and input the data to the corresponding charging load prediction model to obtain the probability that the target is to be charged at the specific time and the specific place as well as the charging load of the target, to implement charging facility planning and construction in some areas over time. The second communication module is connected with the image acquisition unit, the temperature detection unit, the Internet of vehicles service system, and the positioning unit by the 5G network.

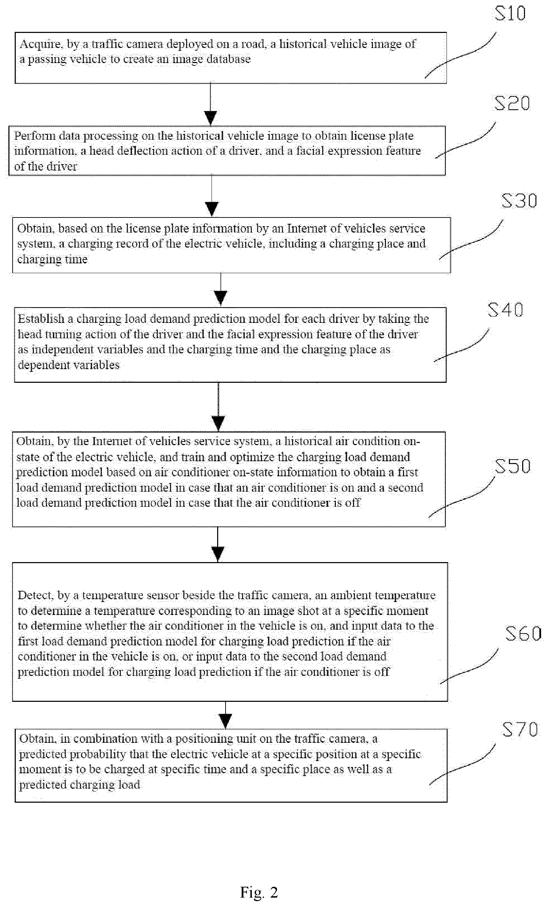

Another embodiment of the present disclosure provides a non-intrusive detection-based charging load probability prediction method, which, as shown in Fig. 2, includes the following steps.

In S10, a historical vehicle image of a passing vehicle is acquired by a traffic camera deployed on a road to create an image database.

In S20, data processing is performed on the historical vehicle image to obtain license plate information, a head deflection action of a driver, and a facial expression feature of the driver.

In S30, a charging record of the electric vehicle is obtained based on the license plate information by an Internet of vehicles service system, including a charging place and charging time.

In S40, a charging load demand prediction model for each driver is established by taking the head turning action of the driver and the facial expression feature of the driver as independent variables and the charging time and the charging place as dependent variables.

In S50, a historical air condition on-state of the electric vehicle is obtained by the Internet of vehicles service system, and the charging load demand prediction model is trained and optimized based on air conditioner on-state information to obtain a first load demand prediction model in case that an air conditioner is on and a second load demand prediction model in case that the air conditioner is off.

In S60, an ambient temperature is detected by a temperature sensor beside the traffic camera to determine a temperature corresponding to an image shot at a specific moment to determine whether the air conditioner in the vehicle is on, where there is made such a setting that the air conditioner in the vehicle is off if the ambient temperature detected by the temperature sensor is 14°C to 28°C, otherwise the air conditioner in the vehicle is on. Data is input to the first load demand prediction model for charging load prediction if the air conditioner in the vehicle is on, or data is input to the second load demand prediction model for charging load prediction if the air conditioner is off.

In S70, a predicted probability that the electric vehicle at a specific position at a specific moment is to be charged at specific time and a specific place as well as a predicted charging load are obtained in combination with a positioning unit on the traffic camera.

In an embodiment of the present disclosure, the image database includes $m$ cameras, $t$ moments, and historical image data of $n$ targets, including totally *mnt* basic images.

In an embodiment of the present disclosure, recognition of the license plate information includes the following steps.

In B10, license plate image preprocessing is performed: the vehicle image is converted from an RGB channel to an HSV channel, an HSV-channel image is converted into a grayscale image, and binarization and morphological processing are performed on the grayscale image.

In B20, license plate positioning is performed: rectangle detection is performed on the grayscale image subjected to morphological processing by use of function cv2.findContours() to position a license plate region, and the license plate region is segmented.

In B30, license plate character segmentation is performed: license plate horizontal straightening, license plate frame and rivet removal, and character segmentation operations are sequentially performed on the segmented license plate region, license plate horizontal straightening including inclination angle detection and inclination correction.

In B40, license plate character recognition is performed: HOG feature extraction is performed to convert characters on the image into feature vectors, and classification and discrimination are performed by an SVM classification algorithm.

In B50, a result is obtained: whether the electric vehicle is a new-energy vehicle as well as a license plate number are recognized by classification and discrimination.

In an embodiment of the present disclosure, the head turning action of the driver is obtained by the following steps.

Data processing is performed on the image of the passing vehicle to obtain vehicle type information and driver position information, and a head turning direction of the driver and a corresponding direction of an instrument panel are determined based on the vehicle type information and the driver position information.

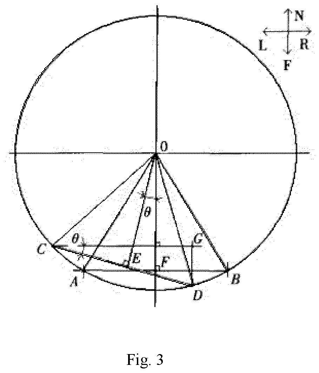

According to a law of human head movement, if a human head turns about a central axis of the head without swinging leftwards and rightwards in a vertical direction, a head turning model of a driver may be reduced to a model shown in Fig. 3. A line segment connecting two eyes in case that a head of the driver faces forward is represented as a line segment $\overline{AB}$. A spatial connecting line segment between the two eyes after the head turns by an angle $\theta$ is represented as a line segment $\overline{CD}$. Since a distance between two eyes of a person is fixed, the line segments $\overline{AB}$ and $\overline{CD}$ are numerically

equal. A projection of a distance between the two eyes on a frontal plane after the head turns is represented as a line segment $\overline{CG}$, i.e., a distance between the two eyes shown in the two-dimensional image after the head turns. Geometric analysis is performed to obtain that an acute angle between the line segment $\overline{CG}$ and the line segment $\overline{CD}$ is equal to the angle that the head turns by, such that a calculation formula for the angle that the head turns by is represented as:

$$\theta = \arccos(\frac{\overline{CG}}{\overline{CB}})$$
.

It is determined that the head turns to the left if $\theta$ is calculated to be negative. It is determined that the head turns to the right if $\theta$ is positive. It is determined that the driver turns to look at the instrument panel if the head turns to the right by more than 30 degrees.

In an embodiment of the present disclosure, the facial expression feature of the driver is obtained by the following steps.

In a feature sampling layer, image data preprocessing, face detection, face positioning, convolution feature learning, and feature sampling are performed on the vehicle image, an original vehicle image sequence $x = \{x_1, x_2, \cdots, x_T\}$ is input, and the image is preprocessed to eliminate an impact of light. At moment $t = 1$, a face image is fast positioned and segmented by a Fast-CNN method. Fast face image tracking and segmentation are performed at a subsequent moment. Then, the face image is input to a convolutional neural network for learning, and cross convolution and pooling are performed to generate abstract image features. Finally, the abstract image features are input to a K-average sampling layer, average sampling is performed on totally K continuous image features $x_{T-K+1}, x_{T-K+2}, \cdots, x_T$ in the K-average sampling layer, and averagely sampled image features are input to an RNN for learning as input features.

Main loop of the RNN and information memorization of an LSTM are implemented: a convolution sampled feature vector is obtained from the feature sampling layer as an input, then the feature vector is input to the RNN according to a time sequence, information is extracted by the recurrent unit LSTM to generate state information, and finally, an output feature vector is classified.

A feature vector output sequence learned by the RNN is classified, where T is set as a sequence length, L is set as a length of a label, and when there is the sequence T, there are L to the T-th possibilities for the label path, each of which is referred to as a "path", and a formula for a conditional probability of the path is:

$$p(\pi|x) = \prod_{t=1}^{T} y^t_{\pi(t)} = \prod_{t=1}^{T} p(\pi_{(t)}|x)$$

where $\pi_{(t)}$ represents an output path $\pi$ at moment t, and $y^t$ represents a network output of the RNN at moment t;

a predicted conditional probability of the label is represented as a sum of conditional probabilities of the corresponding paths:

$$p(L|\mathrm{x}) = \sum_{V_{(\pi)}=L} p(\pi|x)$$

where V represents an operator of converting the output path $\pi$ into a target L; and

when images are input to the sequence for training, an expression in an image input at a current moment is a label corresponding to the maximum conditional probability:

$$\mathrm{L}^* = \arg\max_{L} p(L|x)$$

Various expressions of anger, disgust, fear, happiness, sadness, surprise, and neutrality of the driver are recognized.

In an embodiment of the present disclosure, the charging load demand prediction model is established by the following steps.

If model training is performed with N sets of data, random forest algorithm analysis is performed:

in a: a charging behavior of the electric vehicle is determined as a predictive variable $X_o$, and eight factors of anger, disgust, fear, happiness, sadness, surprise, and neutrality shown on a face of the driver as well as head turning within one hour before charging are determined as affecting variables $X_i$;

in b: a sampling frequency $b = 1, 2, \cdots, B_s$ is set, and steps c and d are repeated;

in c: a sample subset is randomly selected from $X_o$ and $X_i$ as a training set by an autonomous repeated sampling technology; and

in d: a regression tree model $r_{fb}$ is obtained based on the training set.

After training, for a new sample x, predicted values of all regression trees are averaged by a random forest model to obtain a predicted value $\hat{p}$ of the sample:

$$\hat{p} = \frac{1}{B_s} \sum_{b=1}^{B_s} r_{fb}(x)$$

The above embodiments are only for describing rather than limiting the technical solutions of the present disclosure. Although the present disclosure is described with reference to the preferred embodiments in detail, it can be understood by those of ordinary skill in the art that modifications and equivalent replacements can be made to the technical solutions of the present disclosure without departing from the principle and scope of the technical solutions of the present disclosure, and these modifications or equivalent replacements shall all fall within the scope of the claims of the present disclosure. All techniques, shapes, and structures that are not described in detail in the present disclosure are known technologies.

## Claims

1. A non-intrusive detection-based charging load probability prediction system, comprising:

an image acquisition unit, configured to obtain an image of a passing vehicle through a traffic camera deployed on each road, and perform image data processing;
a temperature detection unit, configured to obtain an ambient temperature through a temperature sensor mounted beside the traffic camera;
a positioning unit, mounted to the traffic camera and configured to obtain a position of the traffic camera to further obtain a position of the electric vehicle at a shooting moment;
an Internet of vehicles service system, configured to obtain current charging station information around based on the geographical position of the traffic camera; and
a cloud storage computing platform in communication connection with the image acquisition unit, the temperature detection unit, the Internet of vehicles service system, and the positioning unit, configured to perform data processing and storage on a historical vehicle image acquired by the image acquisition unit and train a charging load prediction model by combining license plate information, a head turning action of a driver, and a facial expression feature of the driver recognized from historical vehicle image data with historical air conditioner on-state data and historical charging record of the electric vehicle, and configured to receive in real time the vehicle image acquired and processed by the traffic camera and real-time temperature data of a temperature sensor, classify data recognized from the vehicle image according to a temperature data range, and input the data to the corresponding charging load prediction model to obtain a probability that the target is to be charged at specific time and a specific place as well as a charging load of the target, for charging facility planning and construction in some areas over time.

2. The non-intrusive detection-based charging load probability prediction system according to claim 1, wherein the image acquisition unit comprises:

the traffic camera, deployed on each road and configured to shoot the image of the passing vehicle,
an image preprocessing module in communication connection with the traffic camera, configured to perform data enhancement, normalization, and graying processing on the image of the passing vehicle, and
a first communication module, connected with the cloud storage computing platform by a 5th-Generation (5G) network and configured to upload the preprocessed vehicle image to the cloud storage computing platform;
the temperature detection unit comprises:

the temperature sensor, mounted beside the traffic camera and configured to monitor the ambient temperature, and
a third communication module, connected with the cloud storage computing platform by the 5G network and configured to upload the ambient temperature to the cloud storage computing platform;
the positioning unit comprises:

a positioning module, configured to obtain the position of the traffic camera to further obtain the position of the electric vehicle at the shooting moment, and
a fourth communication module, connected with the cloud storage computing platform by the 5G network and configured to upload position information data to the cloud storage computing platform; and
the Internet of vehicles service system comprises:

a database module, configured to store charging station information of each area,
a charging recording module, configured to store historical charging data of various electric vehicles,
an air conditioner on-state recording module, configured to store historical air conditioner on-state data of various electric vehicles, and
a fifth communication module, connected with the cloud storage computing platform by the 5G network and configured to upload the charging station information of each area and the historical charging data and historical air conditioner on-state data of the electric vehicles to the cloud storage computing platform.

3. The non-intrusive detection-based charging load probability prediction system according to claim 2, wherein the cloud storage computing comprises:

a historical image database module, configured to store the preprocessed historical vehicle image to form a historical database;
an image recognition module, configured to recognize the license plate information, the head turning action of the driver, and the facial expression feature of the driver for the electric vehicle in the processed vehicle image;
a model training module, configured to train the charging load prediction model by combining the license plate information, the head turning action of the driver, and the facial expression feature of the driver recognized from the historical vehicle image data and the historical air conditioner on-state data and historical charging record of the electric vehicle;
a model prediction module, configured to receive in real time the vehicle image acquired and processed by the traffic camera and real-time temperature data of the temperature sensor, classify the data recognized from the vehicle image according to the temperature data range, and input the data to the corresponding charging load prediction model to obtain the probability that the target is to be charged at the specific time and the specific place as well as the charging load of the target, to implement charging facility planning and construction in some areas over time; and
a second communication module, connected with the image acquisition unit, the temperature detection unit, the Internet of vehicles service system, and the positioning unit by the 5G network.

4. A non-intrusive detection-based charging load probability prediction method, comprising the following steps:

acquiring, by a traffic camera deployed on a road, a historical vehicle image of a passing vehicle to create an image database;
performing data processing on the historical vehicle image to obtain license plate information, a head deflection action of a driver, and a facial expression feature of the driver;

obtaining, based on the license plate information by an Internet of vehicles service system, a charging record of the electric vehicle, comprising a charging place and charging time; establishing a charging load demand prediction model for each driver by taking the head turning action of the driver and the facial expression feature of the driver as independent variables and the charging time and the charging place as dependent variables; obtaining, by the Internet of vehicles service system, a historical air condition on-state of the electric vehicle, and training and optimizing the charging load demand prediction model based on air conditioner on-state information to obtain a first load demand prediction model in case that an air conditioner is on and a second load demand prediction model in case that the air conditioner is off; detecting, by a temperature sensor beside the traffic camera, an ambient temperature to determine a temperature corresponding to an image shot at a specific moment to determine whether the air conditioner in the vehicle is on, and inputting data to the first load demand prediction model for charging load prediction if the air conditioner in the vehicle is on, or inputting data to the second load demand prediction model for charging load prediction if the air conditioner is off; and obtaining, in combination with a positioning unit on the traffic camera, a predicted probability that the electric vehicle at a specific position at a specific moment is to be charged at specific time and a specific place as well as a predicted charging load.

5. The non-intrusive detection-based charging load probability prediction method according to claim 4, wherein the image database comprises $m$ cameras, $t$ moments, and historical image data of $n$ targets, comprising totally $mnt$ basic images.

6. The non-intrusive detection-based charging load probability prediction method according to claim 5, wherein recognition of the license plate information comprises the following steps:

performing license plate image preprocessing: converting the vehicle image from a Red Green Blue (RGB) channel to a Hue Saturation Value (HSV) channel, converting an HSV-channel image into a grayscale image, and performing binarization and morphological processing on the grayscale image; performing license plate positioning: performing rectangle detection on the grayscale image subjected to morphological processing by use of function cv2.findContours() to position a license plate region, and segmenting the license plate region; performing license plate character segmentation: sequentially performing license plate horizontal straightening, license plate frame and rivet removal, and character segmentation operations on the segmented license plate region, license plate horizontal straightening comprising inclination angle detection and inclination correction; performing license plate character recognition: performing Histogram of Oriented Gradient (HOG) feature extraction to convert characters on the image into feature vectors, and performing classification and discrimination by a Support Vector Machine (SVM) classification algorithm; and obtaining a result: recognizing whether the electric vehicle is a new-energy vehicle as well as a license plate number by classification and discrimination.

7. The non-intrusive detection-based charging load probability prediction method according to claim 6, wherein the head turning action of the driver is obtained by the following steps:

performing data processing on the image of the passing vehicle to obtain vehicle type information and driver position information, and determining a head turning direction of the driver and a corresponding direction of an instrument panel based on the vehicle type information and the driver position information; according to a law of human head movement, if a human head turns about a central axis of the head without swinging leftwards and rightwards in a vertical direction, representing a line segment connecting two eyes in case that a head of the driver faces forward as a line segment $\overline{AB}$, representing a spatial connecting line segment between the two eyes after the head turns by an angle $\theta$ as a line segment $\overline{CD}$, the line segments $\overline{AB}$ and $\overline{CD}$ being numerically equal, representing a projection of a distance between the two eyes on a frontal plane after the head turns as a line segment $\overline{CG}$, and performing geometric analysis to obtain that an acute angle between the line segment $\overline{CG}$ and the line segment $\overline{CD}$ is equal to the angle that the head turns by, such that a calculation formula for the angle that the head turns by is represented as:

$$\theta = \arccos(\frac{\overline{CG}}{\overline{CB}});$$

and

determining that the head turns to the left if $\theta$ is calculated to be negative, and determining that the head turns to the right if $\theta$ is positive.

8. The non-intrusive detection-based charging load probability prediction method according to claim 7, wherein the facial expression feature of the driver is obtained by the following steps:

in a feature sampling layer, performing image data preprocessing, face detection, face positioning, convolution feature learning, and feature sampling on the vehicle image, inputting an original vehicle image sequence $x = \{x_1, x_2, \cdots x_T\}$, and preprocessing the image to eliminate an impact of light; at moment $t = 1$, fast positioning and segmenting a face image by a Fast-Convolutional Neural Network (Fast-CNN) method; performing fast face image tracking and segmentation at a subsequent moment; then, inputting the face image to a convolutional neural network for learning, and performing cross convolution and pooling to generate abstract image features; finally, inputting the abstract image features to a K-average sampling layer, performing average sampling on totally K continuous image features $x_{T-K+1}, x_{T-K+2}, \cdots, x_T$ in the K-average sampling layer, and inputting averagely sampled image features to a Recurrent Neural Network (RNN) for learning as input features;

implementing main loop of the RNN and information memorization of a Long Short Term Memory (LSTM): obtaining a convolution sampled feature vector from the feature sampling layer as an input, then inputting the feature vector to the RNN according to a time sequence, extracting, by the recurrent unit LSTM, information to generate state information, and finally, classifying an output feature vector;

classifying a feature vector output sequence learned by the RNN, wherein T is set as a sequence length, L is set as a length of a label, and when there is the sequence T, there are L to the T-th possibilities for label path, each of which is referred to as a "path", and a formula for a conditional probability of the path is:

$$p(\pi|\mathrm{x}) = \prod_{t=1}^{T} y^{t}_{\pi(t)} = \prod_{t=1}^{T} p(\pi_{(t)}|x)$$

where $\pi_{(t)}$ represents an output path $\pi$ at moment t, and $y^t$ represents a network output of the RNN at moment t;

a predicted conditional probability of the label is represented as a sum of conditional probabilities of the corresponding paths:

$$p(L|\mathrm{x}) = \sum_{V_{(\pi)=L}} p(\pi|x)$$

where V represents an operator of converting the output path $\pi$ into a target L;

when images are input to the sequence for training, an expression in an image input at a current moment is a label corresponding to the maximum conditional probability:

$$L^{*} = \arg\max_{L} p(L|x) \quad ;$$

and

recognizing various expressions of anger, disgust, fear, happiness, sadness, surprise, and neutrality of the driver.

9. The non-intrusive detection-based charging load probability prediction method according to claim 8, wherein the charging load demand prediction model is established by the following steps:

if model training is performed with N sets of data, performing random forest algorithm analysis:

a: determining a charging behavior of the electric vehicle as a predictive variable $X_o$ and eight factors of anger, disgust, fear, happiness, sadness, surprise, and neutrality shown on a face of the driver as well as head turning within one hour before charging as affecting variables $X_i$;

b: setting a sampling frequency $b = 1, 2, \cdots, B_s$, and repeating steps c and d;

c: randomly selecting a sample subset from $X_o$ and $X_i$ as a training set by an autonomous repeated sampling technology;

d: obtaining a regression tree model $r_{fb}$ based on the training set; and

after training, for a new sample $x$, averaging predicted values of all regression trees by a random forest model to obtain a predicted value $\hat{p}$ of the sample:

$$\hat{p} = \frac{1}{B_s} \sum_{b=1}^{B_s} r_{fb}(x)$$

10. The non-intrusive detection-based charging load probability prediction method according to claim 9, wherein in the step of determining whether an air conditioner in the vehicle is on, there is made such a setting that the air conditioner in the vehicle is off if the ambient temperature detected by the temperature sensor is 14°C to 28°C, otherwise the air conditioner in the vehicle is on.

Image acquisition unit

Image preprocessing module

First
communication module

Traffic camera

Positioning
module

Fourth
communication module

Positioning unit

Image
recognition module

Model training module

Historical image database module

Model prediction module

Second
communication module

Cloud storage computing platform

Temperature sensor

Third
communication module

Temperature detection unit

Charging
recording module

Database module

Fifth
communication module

Air conditioner
on-state recording module

Internet of vehicles service system

Fig. 1

S10

Acquire, by a traffic camera deployed on a road, a historical vehicle image of a passing vehicle to create an image database

S20

Perform data processing on the historical vehicle image to obtain license plate information, a head deflection action of a driver, and a facial expression feature of the driver

S30

Obtain, based on the license plate information by an Internet of vehicles service system, a charging record of the electric vehicle, including a charging place and charging time

S40

Establish a charging load demand prediction model for each driver by taking the head turning action of the driver and the facial expression feature of the driver as independent variables and the charging time and the charging place as dependent variables

S50

Obtain, by the Internet of vehicles service system, a historical air condition on-state of the electric vehicle, and train and optimize the charging load demand prediction model based on air conditioner on-state information to obtain a first load demand prediction model in case that an air conditioner is on and a second load demand prediction model in case that the air conditioner is off

S60

Detect, by a temperature sensor beside the traffic camera, an ambient temperature to determine a temperature corresponding to an image shot at a specific moment to determine whether the air conditioner in the vehicle is on, and input data to the first load demand prediction model for charging load prediction if the air conditioner in the vehicle is on, or input data to the second load demand prediction model for charging load prediction if the air conditioner is off

S70

Obtain, in combination with a positioning unit on the traffic camera, a predicted probability that the electric vehicle at a specific position at a specific moment is to be charged at specific time and a specific place as well as a predicted charging load

Fig. 2

Fig. 3

| INTERNATIONAL SEARCH REPORT | International application No. |
|---|---|
| | **PCT/CN2022/103801** |

**A. CLASSIFICATION OF SUBJECT MATTER**

G06Q 10/06(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

WPI; EPODOC; CNPAT; CNKI; IEEE: 非侵入, 概率, 图像, 采集, 温度, 检测, 定位, 动作, 车联网, 充电负荷, 空调, 车主, 动作, electric, vehicle, temperature, position, traffic, camera, invasive, detection, charging

**C. DOCUMENTS CONSIDERED TO BE RELEVANT**

| Category* | Citation of document, with indication, where appropriate, of the relevant passages | Relevant to claim No. |
|---|---|---|
| PX | CN 114418298 A (CHONGQING UNIVERSITY OF POSTS AND TELECOMMUNICATIONS) 29 April 2022 (2022-04-29) claims 1-10 | 1-10 |
| A | CN 110363331 A (STATE GRID TIANJIN ELECTRIC POWER COMPANY ELECTRIC POWER RESEARCH INSTITUTE et al.) 22 October 2019 (2019-10-22) description, paragraphs [0031]-[0098] | 1-10 |
| A | CN 106908075 A (FUZHOU UNIVERSITY) 30 June 2017 (2017-06-30) entire document | 1-10 |
| A | CN 107392400 A (CHONGQING UNIVERSITY) 24 November 2017 (2017-11-24) entire document | 1-10 |
| A | US 2018211116 A1 (ECHELON CORPORATION) 26 July 2018 (2018-07-26) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 September 2022** | **29 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/103801**

| Patent document cited in search report | | | Publication date (day/month/year) | Patent family member(s) | | | Publication date (day/month/year) |
|---|---|---|---|---|---|---|---|
| CN | 114418298 | A | 29 April 2022 | None | | | |
| CN | 110363331 | A | 22 October 2019 | None | | | |
| CN | 106908075 | A | 30 June 2017 | None | | | |
| CN | 107392400 | A | 24 November 2017 | None | | | |
| US | 2018211116 | A1 | 26 July 2018 | WO | 2018140376 | A1 | 02 August 2018 |

Form PCT/ISA/210 (patent family annex) (January 2015)